(19) Europäisches Patentamt / European Patent Office / Office européen des brevets

(11) **EP 2 534 188 B1**

(12) # EUROPÄISCHE PATENTSCHRIFT

(45) Veröffentlichungstag und Bekanntmachung des Hinweises auf die Patenterteilung:
**28.03.2018 Patentblatt 2018/13**

(21) Anmeldenummer: **11718250.1**

(22) Anmeldetag: **10.02.2011**

(51) Int Cl.:
***C09K 17/16*** *(2006.01)* ***C09K 17/32*** *(2006.01)*
***C08H 7/00*** *(2011.01)*

(86) Internationale Anmeldenummer:
**PCT/DE2011/000152**

(87) Internationale Veröffentlichungsnummer:
**WO 2011/098078 (18.08.2011 Gazette 2011/33)**

(54) **SUBSTRAT ZUR BODENVERBESSERUNG MIT WASSER SPEICHERNDER EIGENSCHAFT, VERFAHREN ZUR HERSTELLUNG UND DESSEN VERWENDUNG**

SUBSTRATE FOR SOIL IMPROVEMENT HAVING A WATER-STORING PROPERTY, METHOD FOR PRODUCING SAME, AND USE THEREOF

SUBSTRAT D'AMENDEMENT DU SOL AYANT UNE PROPRIÉTÉ D'EMMAGASINAGE DE L'EAU, PROCÉDÉ DE FABRICATION ET UTILISATION DE CE SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2010 DE 102010008393**

(43) Veröffentlichungstag der Anmeldung:
**19.12.2012 Patentblatt 2012/51**

(73) Patentinhaber: **Technische Universität Dresden 01069 Dresden (DE)**

(72) Erfinder:
- **PASSAUER, Lars**
  **01069 Dresden (DE)**
- **LIEBNER, Falk**
  **01737 Braunsdorf (DE)**
- **FISCHER, Klaus**
  **01737 Kurtort Hartha (DE)**
- **KATZUR, Joachim**
  **15907 Lübben/Spreewald (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
**JP-A- 2006 066 237** **US-A- 3 857 830**
**US-A1- 2002 065 400** **US-B1- 6 541 038**
**US-B1- 6 593 460**

- **Lars Passauer: "Beiträge zur Entwicklung Wasser speichernder Materialien auf Basis von Stärke und Lignin", , 7 July 2008 (2008-07-07), pages 1-179, XP055108408, Retrieved from the Internet: URL:http://www.qucosa.de/fileadmin/data/qucosa/documents/321/1218103243285-9563.pdf [retrieved on 2014-03-17]**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 534 188 B1

## Beschreibung

Die Erfindung betrifft ein Substrat zur Bodenverbesserung mit Wasser speichernder Eigenschaft, Verfahren zur Herstellung und Verwendung nach den Merkmalen der Ansprüche 5, 1 bzw. 9.

Als Bodenverbesserer auf der Basis von Naturprodukten kommen z.B. Stärke-Pfropfcopolymere zur Anwendung, die im Laufe weniger Wochen allerdings abgebaut sind. Für die Verwendung eines Bodenwasserspeichers ist es wichtig, dass dieser nicht zu schnell abgebaut wird. Lignin ist ein Biopolymer, welches gegen mikrobielle Zersetzung im Vergleich zu Polysacchariden wie Stärke oder Cellulose stabiler ist.

Aus der DE 198 28 483 A1 ist ein Produkt als Bodenverbesserer oder zur Verbesserung eines Pflanzenwachstumsmediums bekannt geworden, das als wesentlichen Bestandteil ein Ligninsulfonat-Gel enthält. Dieses Produkt soll Wasser und ionische Nährstoffinaterialien binden können. Zur Herstellung des Ligninsulfonat-Geles aus Ligninsulfonaten wird unter anderem auf die an sich bekannte Vernetzung mit Formaldehyd (z.B. US 3 864 276 und US 4 332 589) verwiesen. Die an sich bekannte Vernetzungsreaktion erfolgt in den genannten Druckschriften zur Vernetzung der an sich wasserlöslichen Ligninsulfonate.

Dem aus DE 198 28 483 A1 bekannten Produkt wird zwar eine Fähigkeit zum Binden von Wasser zugeschrieben; diese Art der Vernetzung von Ligninsulfonaten führt aber bekanntlich zu reaktionsträgen und nur mäßig quellbaren Gelen. Das Wasseraufnahmevermögen der Ligninsulfonat-Gele wird nicht näher spezifiziert.

Aus der DE 27 03 812 A1 ist ein vernetztes Lignin-Gel und ein Verfahren zur Herstellung vernetzter Lignin-Gele bekannt, welche als gesteuerte Freisetzungsträger für verschiedene Pestizide zur Anwendung kommen. Zur Herstellung des Gels wird vorzugweise Alkali-Lignin mit Formaldehyd, Glutaraldehyd oder Epichlorhydrin vernetzt. Dabei werden Gele gebildet, die das 3 bis 11-Fache ihres Eigengewichtes an Wasser aufnehmen.

Der Druckschrift DE 27 03 812 A1 ist zu entnehmen, dass das aldehydvernetzte Gel eine kleine Trockenoberfläche und eine fast nicht existierende, wasserfreie Porenstruktur aufweist. Damit eignet sich das Gel zur gesteuerten Freisetzung von Pestiziden, ist aber als Wasserspeicher im Boden völlig ungeeignet.

Aus der DE 26 23 663 A1 ist eine pestizide Masse mit Gelträger und ein Verfahren zu deren Herstellung bekannt. Diese Erfindung betrifft einen verbesserten Träger auf Lignin-Basis zur geregelten Freigabe organischer wasserunlöslicher Pestizide. Die Vernetzung von Lignin erfolgt mittels Epichlorhydrin. Wie in DE 27 03 812 A1 ist das Produkt aufgrund seiner geringen Porosität von lediglich 1,8 $m^2/g$ als Wasserspeicher ungeeignet. Die Vernetzung von Alkali-Lignin mit Epichlorhydrin wird ebenfalls in US 4 131 573 beschrieben.

Die Vernetzung von Lignin mit Diepoxiden, allerdings zur Herstellung von Flockungsmitteln, wird beschrieben in US 3 857 830. Hier erfolgt die Vernetzung von Lignin mit Diepoxiden im wässrigen alkalischen Medium und organischen Lösungsmitteln, wobei nicht wasserlösliche Epoxide in nicht wasserlöslichen organischen Lösungsmitteln umgesetzt werden. Als Vernetzungsagenzien finden C-verknüpfte Diepoxide, Diglycidylether und Diglycidylamine Verwendung.

Die Verwendung bifunktioneller Epoxide, speziell von Poly-(ethylenglykol)-diglycidylether, zur Herstellung von auf Lignin basierenden Hydrogelen wird beschrieben von M. Nishida, Y. Uraki, Y. Sano, Proc. ISWPC Vol II, 43-46, 2001 bzw. M. Nishida, Y. Uraki, Y. Sano, Bioresource Technol. 2003, 88, 81-83. Dabei wurden durch Säureaufschluss gewonnene Lignine verwendet und deren Quellungsverhalten in wässrigen organischen Lösungsmitteln untersucht. Das Quellungsvermögen der Gele war vergleichsweise gering. H. Yamamoto, M. Amaike, H. Saitoh, Y. Sano, Mat. Sci. Eng. C7 2000, 143-147 beschreiben die Herstellung von Hydrogelen aus einem Gemisch von Kraft-Lignin, Phenol und Formaldehyd. Das Wasseraufnahmevermögen dieser Gele war gering und stand nicht im Mittelpunkt der Betrachtung. Eine weitere Möglichkeit zur Synthese von Lignin-Hydrogelen besteht in der Copolymerisation zwischen Acrylamid und Polyvinylalkohol mit Lignin (W.K. El-Zawawy, Polym. Adv. Technol. 2005, 16, 48-54). Das Wasseraufnahmevermögen der beschriebenen Gele liegt unter 10 g Wasser je g trockener Gelsubstanz.

Die US 6,593,460 B offenbart eine Methode zur Herstellung von biologisch abbaubaren, mit Lignin veredelten Polymere, hergestellt aus ethylenisch ungesättigten Monomeren mittels enzymatisch katalysierter Polymerisation unter der Anwesenheit von organischen Peroxiden. Die Polymere können aufgrund ihrer guten Komplexierungseigenschaften, besonders für mehrwertige Ionen, beispielsweise in Waschmitteln zur Verhinderung der Krustenbildung eingesetzt werden.

Die Aufgabe der Erfindung besteht darin, ein Substrat auf Lignin-Basis zur Bodenverbesserung mit Wasser speichernder Eigenschaft, ein Verfahren zur Herstellung und dessen Verwendung anzugeben, welches das gespeicherte Wasser über einen längeren Zeitraum bindet und nach Bedarf an den Boden abgibt, wobei die Lignin-Basis nicht reaktionsträge und quellfähig sein soll.

Erfindungsgemäß wird die Aufgabe durch ein Verfahren mit den im Anspruch 1 genannten Merkmalen gelöst. Vorteilhafte Varianten des Verfahrens sind Gegenstand von abhängigen Unteransprüchen. Die Aufgabe wird weiterhin durch ein Substrat nach Anspruch 5 und die Verwendung des Substrates nach Anspruch 9 gelöst.

Erfindungsgegenstand sind Absorber bzw. Hydrogele, die durch Vernetzung von Ligninen mit mehrfach funktionellen Vernetzersubstanzen, speziell Diglycidylethern, hergestellt werden. Der Vernetzung geht eine Vorbehandlung des Lignins im Sinne einer Oxidation voraus. Die besondere Eigenschaft der erzeugten Produkte besteht in ihrer deutlich

erhöhten Quellungsleistung gegenüber Gelen, die aus nicht modifizierten technischen Ligninen erzeugt werden. Die native Herkunft des Lignins als Ausgangsstoff bewirkt, dass das Produkt unbedenklich und umweltverträglich ist.

Das Produkt ist in der Lage, das Vielfache seines Eigengewichtes an Wasser aufzunehmen, also zu quellen. Die Materialien zeigen keine Neigung zum Gelblocking, einem Verkleben der äußersten Schichten des Materials beim Kontakt mit Wasser, was ein weiteres Vordringen von Wasser vermeidet. Aufgrund der Granulatform des Materials in getrocknetem Zustand separieren die Absorber beim Quellen in einzelne Partikel, bilden also keinen "Gelblock". Sie weisen unterschiedliche Gelstabilitäten auf, die individuell durch Variation des Vernetzungsgrades bzw. Verwendung unterschiedlicher Spacer eingestellt werden können. Dies ist auch insofern von Bedeutung, als das Wasseraufnahmevermögen und die Stabilität chemischer Netzwerke gegenläufige Parameter darstellen, aber über den Vernetzungsgrad die gewünschte Kombination dieser erreicht wird.

Als Ausgangsstoffe können verschiedene technische Lignine wie Alkali-Lignin (z.B. Indulin™ AT), Organosolv-Lignin (z.B. Organocell-Lignin) aber auch sogenannte Hydrolyse-Lignine z.B. aus annuellen Pflanzen (z.B. Zuckerrohr) wie z.B. Sucrolin™ (Bagasse-Lignin) verwendet werden. Als Vernetzersubstanzen fungieren mehrfach funktionelle Verbindungen, bevorzugt bifunktionelle Epoxide, speziell Diglycidylether

Die Oxidation des Lignins erfolgt in wässriger alkalischer Lösung oder wässriger pHneutraler Suspension, die anschließende Vernetzung im wässrigen alkalischen Medium. Die Herstellungs- bzw. Reaktionszeit während der Oxidation des Lignins beträgt 12-24 h, die Vernetzungsdauer beträgt wenige Stunden (ca. 3-8 h, je nach umgesetzter Stoffmenge und verwendetem Lignin).

Die Oxidation des Lignins erfolgt vorteilhaft mit Wasserstoffperoxid oder den Systemen Wasserstoffperoxid / Eisen(II) (Fenton-System) bzw. Wasserstoffperoxid / Mangan(II).

Das Fenton-System wird unter anderem bereits zur Hydroxylierung aromatischer Strukturen eingesetzt. Hier wird auf die DE 689 03 601 und DE 698 00 265 T2 verwiesen, in denen die Hydroxylierung aromatischer Kohlenwasserstoffe mit Wasserstoffperoxid / Eisensulfat beschrieben wird. DE 26 58 943 beschreibt die Herstellung aromatischer Dihydroxyverbindungen wie Brenzcatechine und Hydrochinone. Nach DE 25 58 545 kann eine Kernhydroxylierung auch mittels Oxidation mit Wasserstoffperoxid in Kombination mit verschiedenen Säuren erfolgen.

Die durch die Oxidation bedingten strukturellen Veränderungen wie Einführung sauerstofffunktioneller Gruppen und Aufspaltung des Lignin-Makromoleküls bewirken eine Erhöhung der Reaktivität und Hydrophilie des Lignins und damit seine wesentlich verbesserte Vernetzbarkeit und ein um das bis zu 8-fach gesteigerte Wasseraufiiahmevermögen der resultierenden Gele im Vergleich zu Produkten, die durch Vernetzung nicht modifizierter technischer Lignine mit Diglycidylethern nach M. Nishida et al., Proc. ISWPC 2001 Vol II, 43-46 bzw. M. Nishida et al., Bioresource Technol. 2003, 88, 81-83 und L. Passauer, DiplomArbeit, TU-Dresden, 2004 erhalten wurden. Die oxidative Vorbehandlung des Lignins erfolgt mittels zweier alternativer Verfahren:

1.) Das Lignin wird in Natronlauge gelöst und mehrere Stunden gerührt. Anschließend erfolgt die Zugabe einer wässrigen Wasserstoffperoxid-Lösung mit definierter Konzentration. Das Gemisch wird wiederum mehrere Stunden gerührt und anschließend der Vernetzer langsam zugetropft. Das Produkt wird anschließend mit verdünnter Schwefelsäure bis zur Neutralisation gewaschen, getrocknet und zerkleinert.

2.) Das Lignin wird zunächst in Wasser suspendiert und kurz gerührt. Anschließend erfolgt die Zugabe eines Eisen(II)- bzw. Mangan(II)-Salzes. Um eine möglichst gleichmäßige Verteilung der $Fe^{2+}$- bzw. $Mn^{2+}$-Ionen in der Suspension zu gewährleisten (hydrophober Charakter der verwendeten Lignine), wird für wenige Stunden weiter gerührt. Anschließend wird eine wässrige Wasserstoffperoxid-Lösung definierter Konzentration zugegeben und die Suspension mehrere Stunden gerührt.

Um eine Vernetzung des voroxidierten Lignins zu erreichen, ist es notwendig, dieses vollständig zu lösen. Zu diesem Zweck wird der Suspension mit dem voroxidierten Lignin Alkali zugegeben und für weitere 12-24 h gerührt. Die Lösung wird dann unter dem Abzug getrocknet bis diese gerade noch rührfähig ist und schließlich die Vernetzersubstanz langsam zugetropft. Als Vernetzer fungieren bifunktionelle Epoxide, bevorzugt Diglycidylether. Das Gemisch wird solange weitergerührt, bis dies aufgrund eines drastischen Viskositätsanstiegs infolge der Vernetzung nicht mehr möglich ist. Das Produkt wird anschließend mit verdünnter Schwefelsäure bis zur Neutralisation gewaschen, getrocknet und zerkleinert. Die Quellungs-Werte konnten durch die oxidative Vorbehandlung um bis zu 800 % gesteigert werden.

Die Umsetzung des voroxidierten Lignins im alkalischen Medium geschieht vor dem Hintergrund, dieses vollständig zu lösen (Überführung phenolischer Strukturen des Lignins in lösliche Phenolate) und bewirkt gleichzeitig die alkalisch katalysierte Ringöffnung an der Epoxy-Gruppe des Diglycidylethers und ermöglicht somit die anschließende Veretherungsreaktion mit dem Lignin.

Die Erfindung wird nachfolgend näher erläutert:

Ausgangsstoffe

Als Ausgangsstoffe wurden folgende technische Lignine verwendet:

- Indulin™ AT (*MeadWestvaco,* Charleston, USA)
- Sucroliri® (*C.G. Smith Chemicals,* Durban, Südafrika)
- Organocell-Lignin (früher *Organocell GmbH München,* Pilotanlage München-Pasing).

Bei Indulin handelt es sich um ein Alkali-Lignin (Kiefern-Kraft-Lignin), welches als Abprodukt beim Alkali-Aufschluss anfällt; Sucrolin entstammt einer Anlage zur Produktion von Furfural und wird durch Autohydrolyse aus Zuckerrohr-Bagasse gewonnen; Organocell-Lignin ist ein Fichten-Organosolv-Lignin.
Als Katalysatoren können u.a.

- Eisen(II)-chloridtetrathydrat $FeCl_2*4H_2O$
- Mangan(II)-chloridtetrahydrat $MnCl_2*4H_2O$
- oder andere Fe(II)- bzw. Mn(II)-Salze

verwendet werden.
Als Vernetzersubstanz wird vorteilhaft Poly-(ethylenglykol)-diglycidylether (mit der nachfolgenden Strukturformel, I), vorzugsweise mit einer durchschnittlichen Anzahl von 9 Ethylenoxid-Gruppen und einem durchschnittlichen Mol-Gewicht Ø MG von 526 (*Sigma-Aldrich*) verwendet.

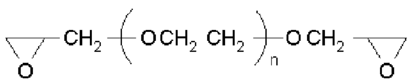

n ~ 9

I

Oxidation- Reaktionsbedingungen

Die Oxidation des Lignins erfolgt mit Wasserstoffperoxid im alkalischen Milieu (1) oder einem Gemisch aus Wasserstoffperoxid und einem Mangan(II)- bzw. Eisen(II)-Salz bei pHneutralen Bedingungen (2).

1.) Das Lignin wurde in 1 bis 3,5 M Natronlauge, bevorzugt 3,3 M Natronlauge gelöst und über einen Zeitraum von 24 h gerührt. Der pH-Wert der Lösung wurde auf 12-13, der Feststoffanteil der alkalischen Lösung in Abhängigkeit vom verwendeten Lignin auf 25-40 % (w/v) eingestellt. Bei Verwendung von Indulin sollte ein Feststoffanteil von vorzugsweise 25-33 % (w/v), bei Verwendung von Sucrolin 36 % und bei Einsatz von Organocell-Lignin 39 % eingestellt werden. Anschließend wurde eine definierte Menge 5%iger wässriger Wasserstoffperoxid-Lösung langsam zugetropft. Die Wasserstoffperoxid-Konzentration in der alkalischen Lignin-Lösung betrug in Abhängigkeit vom eingesetzten Lignin 0,26-0,56 %, in der Indulin-Lösung vorzugsweise 0,45 % (v/v), in der Sucrolin-Lösung bevorzugt 0,31 % und bei Verwendung von Organocell-Lignin 0,45 %. Diese Lösung wurde für 12-24 h, bevorzugt 24 h bei RT gerührt. Bei Oxidation unter Erwärmung wurde die Reaktionszeit verkürzt. Vorzugsweise wurde dann für 3 h bei 80°C gerührt.

2.) Das Lignin wurde zunächst in Wasser suspendiert. Der bevorzugte Feststoffanteil der Lignin-Suspension betrug 25 bis 33 % (w/v), bei Verwendung von Indulin und Organocell-Lignin bevorzugt 33 % (w/v) und bei Einsatz von Sucrolin 25 %. Nach ausreichender Homogenisierung der wässrigen Suspension, hier sollte für mindestens 30 min gerührt werden, erfolgte die Zugabe des Katalysators. Die eingesetzten Stoffmengen an Fe(II)-Salzen betrugen 0,025 bis 0,5 mMol, bevorzugt 0,05 bis 0,15 mMol bezogen auf 1 g Lignin. Bei Verwendung von Mn(II)-Salzen betrugen die eingesetzten Stoffmengen 0,013-0,13 mMol bezogen auf 1 g Lignin. Anschließend wurde wässrige Wasserstoffperoxid-Lösung, bevorzugt 5 %ig (v/v), zugetropft, so dass die Wasserstoffperoxid-Konzentration der Suspension auf 0,3-0,75 %, bevorzugt 0,5 % (w/v), eingestellt wurde. Die optimalen Konzentrationen an Wasserstoffperoxid betrugen bei Verwendung von Indulin und Organocell-Lignin 0,45 % (w/v) und bei Sucrolin 0,31 % (w/v). Die Lignin-Suspensionen wurden nach Zugabe der wässrigen Wasserstoffperoxid-Lösung für 12-24 h, bevorzugt 24 h gerührt. Nach erfolgter Oxidation wurde der Suspension 3,3 M Natronlauge zugegeben und dabei der Ligninanteil auf 20 Masse-% reduziert. Der pH-Wert der resultierenden Lösung betrug ca. 12.

Die infolge der Oxidation bedingten Strukturänderungen werden anhand der empirischen C9-Formel des Lignins dargestellt. Diese stellt die durchschnittliche Zusammensetzung des Lignin-Grundbausteins, der Phenylpropaneinheit

dar. Als Beispiel sind die häufigsten Phenylpropaneinheiten des Lignins dargestellt (Struktur II: p-Cumarylalkohol, Struktur III: Coniferylalkohol, Struktur IV: Sinapylalkohol).

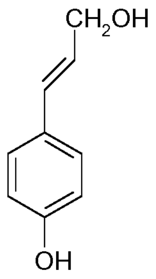
II

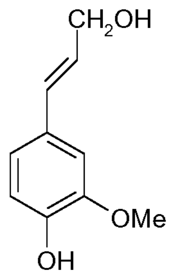
III

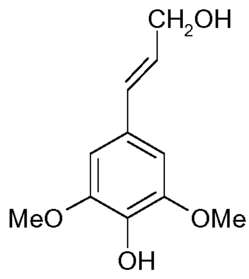
IV

Die mittels Elementaranalyse und Bestimmung sauerstofffunktioneller Gruppen ermittelten C9-Formeln von Indulin AT und mit Wasserstoffperoxid/Eisen(II) oxidiertem Indulin sind in Tabelle 1 dargestellt.

Tab. 1: Empirische C9-Formeln von Indulin und des mit Wasserstoffperoxid/Eisen(II)-chloridtetrahydrat oxidierten Indulins

| | ***Indulin AT*** | ***Indulin ox.*** |
|---|---|---|
| **emp.C9-Formel** | $C_9$ | $C_9$ |
| | $H_{6,8}$ | $H_{6,9}$ |
| | $O_{0,7}$ | $O_{1,2}$ |
| | $S_{0,1}$ | $S_{0,1}$ |
| | $(OCH_3)_{0,8}$ | $(OCH_3)_{0,8}$ |
| | $(OH_{phen})_{0,7}$ | $(OH_{phen})_{1,0}$ |
| | $(OH_{aliph})_{0,7}$ | $(OH_{aliph})_{0,8}$ |
| | $(O_{CO})_{0,1}$ | $(O_{CO})_{0,3}$ |
| | $(OOH_{COOH})_{0,2}$ | $(OOH_{COOH})_{0,3}$ |

Vernetzung- Reaktionsbedingungen

Die Geleigenschaften, besonders das Wasseraufnahmevermögen (FSC, *Free Swelling Capacity*), aber auch die Gelstabilität können über relativ weite Bereiche durch den Vernetzungsgrad, aber auch durch Einsatz verschiedener Spacer variiert werden. Je nach gewünschtem Vernetzungsgrad und in Abhängigkeit vom eingesetzten Lignin und dessen Modifizierung mittels Oxidation wurden 0,15 bis 0,5 mMol Vernetzungsmittel, bezogen auf 1 g Lignin, für die Durchfiihrung benötigt. Als Vernetzer wurden Diglycidylether, bevorzugt Poly-(ethylenglykol)-diglycidylether verwendet. Bei Vernetzung von Ligninen, die mittels Wasserstoffperoxid im alkalischen Medium modifiziert wurden, wurden Vernetzerstoffmengen von 0,3 bis 0,5 mMol, bevorzugt 0,5 mMol verwendet. Die Vernetzersubstanz wurde unmittelbar nach der oxidativen Modifizierung des Lignins langsam in die alkalische Lignin-Lösung getropft und das Stoffgemisch bis zu einem drastischen Viskositätsanstieg (Vernetzung und Gelbildung) gerührt, je nach verwendetem Lignin und Vernetzerstoffmenge 3-12 h. Bei der Vernetzung von Ligninen, die mittels Wasserstoffperoxid/Eisen (II) modifiziert wurden, konnte bei Verwendung des Alkali-Lignins Indulin eine Gelbildung bei Einsatz von Vernetzerstoffmengen von 0,20 bis 0,40 mMol Poly-(ethylenglykol)-diglycidylether beobachtet werden, bei Verwendung eines Organocell-Lignins und Sucrolin waren bevorzugt 0,5 mMol Poly-(ethylenglykol)-diglycidylether notwendig. Auch hier wurde die Vernetzersubstanz langsam in die alkalische Lignin-Lösung zugetropft. Das Stoffgemisch wurde bis zur Vernetzung, die sich durch einen starken Viskositätsanstieg der Lösung manifestiert, gerührt. Der Mechanismus der Vernetzungsreaktion ist im Folgenden dargestellt.

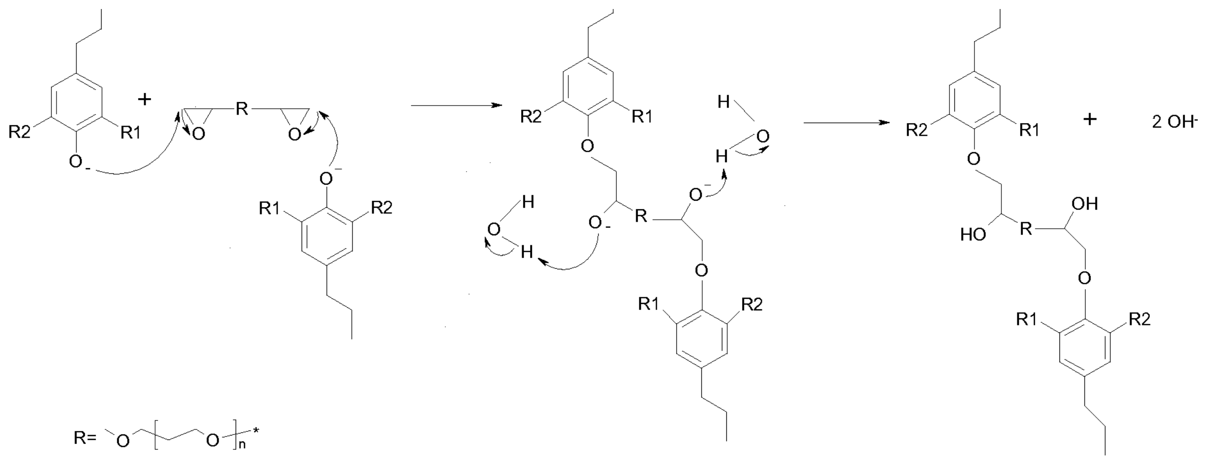

Nach der Vernetzung wurden die Gele mit verdünnter Salzsäure neutralisiert und mit entionisiertem Wasser gewaschen, um Salze und nicht umgesetztes Material zu entfernen. Nach Trocknung des gewaschenen Gels bei 105°C wird ein mahlfähiges Granulat (Xerogel) erhalten.

Über die Vernetzerstoffmenge lassen sich die Geleigenschaften wie Quellungsvermögen, Gelstärke bzw. Gelstabilität (rheologische Parameter) und das Verhalten der Gele bei ihrer Anwendung im Boden, z.B. Wasserretention, gezielt variieren. Im Folgenden werden die dazu nötigen Testverfahren, mit denen ausgewählte physikalische Geleigenschaften bestimmt werden, beschrieben.

Testmethoden

Quellungsvermögen: FSC (Free Swelling Capacity)

Zur Bestimmung des Wasseraufnahme- oder Quellungsvermögens von Hydrogelen werden 0,5 g des zu testenden Produktes (trockenes Gel) in eine G3-Fritte eingewogen. Das in der Fritte befindliche Material wird dann eine Stunde mit Wasser benetzt. Anschließend lässt man die Fritte 10 Minuten abtropfen und ermittelt ihr Gewicht. Daraus lässt sich der FSC-Wert wie folgt bestimmen:

$$FSC = \frac{g(H_2O)}{g(\mathrm{Pr}\,odukt)} = \frac{Auswaage(Fritte) - Blindwert(Fritte)}{Einwaage}$$

Tabelle 2 gibt einen Überblick über die FSC-Werte ausgewählter Lignin-Hydrogele, die auf Basis nicht modifizierter (nicht oxidiert) und oxidativ vorbehandelter technischer Lignine hergestellt wurden. Es lässt sich ein deutlicher Anstieg der FSC-Werte durch oxidative Vorbehandlung des Lignins ableiten.

Tab. 2: FSC-Werte ausgewählter Lignin-Hydrogele auf Basis nicht modifizierter und oxidierter technischer Lignine

| | ***nicht oxidiert*** | ***$H_2O_2$-RT*** | ***$H_2O_2$-80°C*** | ***$H_2O_2$-Fe(II)*** | ***$H_2O_2$-Mn(II)*** |
|---|---|---|---|---|---|
| ***Indulin AT*** | 8,0 | **-** | **9,2*** | **48,5*** | **35,2*** |
| ***Organocell-Lignin*** | 27,9 | **72,5*** | 7,5 | 12,2 | - |

*Verbesserung der Quellungsleistung von Lignin-Gelen durch oxidative Vorbehandlung des Ausgangs-Lignins

Durch Variation der Vernetzerstoffmenge können die FSC-Werte der resultierenden Gele gezielt eingestellt werden. Ein Beispiel gibt Tabelle 3.

Tab. 3: FSC-Werte von Indulin-Gelen bei Variation der Stoffmenge an Poly-(ethylenglykol)-diglycidylether

| ***Vernetzerstoffmenge mMol/g Indulin ox.**** | ***0,21*** | ***0,27*** | ***0,32*** | ***0,38*** |
|---|---|---|---|---|
| ***FSC (g/g)*** | 48,5 | 27,2 | 22,7 | 20,5 |

*Indulin AT oxidiert mit Wasserstoffperoxid/Eisen(II)-chloridtetrahydrat

Rheologische Kenngrößen

Dynamische Viskosität η*, Speichermodul G', Verlustmodul G", Verlustfaktor tan δ

Im Hinblick auf die Einsatzmöglichkeiten von Hydrogelen sind deren rheologische Eigenschaften und die daraus resultierende Materialstabilität von großem Interesse. Die Methode der Wahl zur entsprechenden Charakterisierung chemischer Netzwerke ist die Oszillationsmessung, bei der die Probe einer sinusförmigen Deformation y mit kleiner Amplitude und einer Kreisfrequenz unterzogen wird.

Die rheologischen Parameter der Lignin-Hydrogele wurden mit einem Oszillations-Rheometer BOHLIN bei Variation der Oszillationsfrequenz (Frequenz-Sweep) unter folgenden Messbedingungen ermittelt: Kegel-Platte-System, Kegeldurchmesser 40 mm, Winkel 4°, Temperatur 20°C, Frequenz 0,02-20 Hz, Schubspannung 0,2 bzw. 1,0 Pa.

Bei der Anwendung von Schwingungsmessungen liegen bei genügend kleiner Amplitude der Deformation die ermittelten Werte im sogenannten linearen viskoelastischen Bereich (KULICKE, 1986), was den Vorteil hat, dass die Messungen zerstörungsfrei erfolgen. Es werden gleichzeitig mehrere Parameter ermittelt: dynamische Viskosität η*, Gelstärke bzw. Speichermodul G' (Materialelastizität), Verlustmodul G" (Materialviskosität) und der Verlustfaktor tan δ mit $\delta = G''/G'$. Bei $\tan \delta < 1$ ist das Gel elastisch, bei $\tan \delta > 1$ dominieren die viskosen Eigenschaften.

Die Grafiken der Abbildung 1 zeigen den Verlauf der Parameter dynamische Viskosität η*, Speichermodul G', Verlustmodul G" und Verlustfaktor tan δ in Abhängigkeit von der Kreisfrequenz ω für Gele auf Basis von Indulin AT, oxidiert mit Wasserstoffperoxid/Eisen(II), welches mit unterschiedlichen Stoffmengen Poly-(ethylenglycol)-diglycidylether (0,21, 0,27 bzw. 0,32 mMol/g Indulin) vernetzt wurde. Viskosität und Materialstabilität bzw. Gelstärke nehmen mit der Vernetzerstoffmenge zu.

Wasserretention

Ein entscheidendes Merkmal von Hydrogelen ist deren Wasserrückhaltevermögen bzw. Wasserretention. Bei Verwendung von Hydrogelen als Bodenwasserspeicher wird die Wasserretentionskurve der entsprechenden Bodenproben ermittelt. Die Messung der Wasserretentionskurve, bei der der Wassergehalt (Vol.-%) über der Saugspannung (als pF-Wert) aufgetragen wird, erfolgte nach DIN 16983. Nach vollständiger Aufsättigung mit Wasser wurden die Proben auf keramischen Platten bis zur Gewichtskonstanz schrittweise entwässert. Folgende Entwässerungsstufen wurden eingestellt: pF 1,0 (1 kPa); pF 1,5 (3 kPa); pF 1,8 (6 kPa); pF 2,5 (30 kPa); pF 3,0 (100 kPa) und pF 4,2 (160 kPa) etc. Bei pF-Werten ≤ 2,0 erfolgte die Entwässerung der Proben über eine hängende Wassersäule, bei höheren pF-Werten im Drucktopf durch Überdruck.

Aus den bei unterschiedlichen Druckstufen ermittelten Wassergehalten wurden die Parameter Feldkapazität (FK), nutzbare Feldkapazität (nFK) und permanenter Welkepunkt (PWP) abgeleitet. Diese entsprechen definitionsgemäß dem Wassergehalt eines Bodenkörpers bei den Druckstufen 1,8 (FK), der Differenz des Wassergehaltes bei pF 1,8 und pF 4,2 (nFK) und dem Wassergehalt bei pF 4,2 (PWP).

Abbildung 2 zeigt die Wasserretentionskurven eines mit einem Lignin-Gel behandelten Reinsandes behandelt mit unterschiedlichen Mengen (Null-Variante ◇, 0,1 Masse-% □, 0,25 Masse-% △, 0,5 Masse-% ○) eines Lignin-Hydrogels (Variante IND ox-III-PEGG=Indulin oxidiert mit Wasserstoffperoxid/Eisen(II)-chloridtetrahydrat vernetzt mit Poly-(ethylenglykol)-diglycidylether. FK = Feldkapazität, nFK = nutzbare Feldkapazität, PWP = permanenter Welkepunkt.

Durch die Gel-Applikation (im Beispiel 0,1, 0,25 und 0,5 Masse-% getrocknetes Gel-Granulat) konnten die zurückgehaltenen Wassermengen im Boden deutlich gesteigert werden, wobei die zurückgehaltene Wassermenge mit der eingesetzten Gel-Konzentration steigt. Das betrifft insbesondere den Anteil des pflanzenverfügbaren Haftwassers (pF 2,5 - 4,2). Zurückgeführt werden können diese Effekte auf eine gel-bedingte Erhöhung des Fein- und Mittelporenvolumens im Boden, was mit einer Abnahme des Grobporenanteils korrespondiert. Die Beeinflussung des Bodengefüges erfolgt dabei zum einen über die Quellung der Gelpartikel, zum anderen aber auch über adsorptive Wechselwirkungen zwischen Gel- und Bodenpartikeln, die eine Aggregierung von Bodenteilchen und eine Gefügestabiliserung im Boden begünstigen. Dies wirkt in entsprechend gefährdeten Gebieten der Bodenerosion entgegen. Weiterhin wird durch eine Erhöhung der Wasserretention die Auswaschung von Nährstoffen aus dem Boden verringert und somit die Nährstoffversorgung von Anpflanzungen und Kulturen verbessert.

Applikation

Die Anwendung des Bodenwasserspeichers erfolgt als Pulver bzw. Granulat, welches in einer Menge von 0,1 bis 1 Vol.-%, bevorzugt 0,25 bis 0,5 Vol.-% bezogen auf das Bodenvolumen eingebracht wird.

Ausführunsgbeispiele

Oxidation von Lignin mit Wasserstoffperoxid im alkalischen Milieu und Vernetzung mit Poly-(ethylenglykol)-diglycidylether (nachfolgend PEGG)

1. 10 g Indulin AT werden in 15 ml 3,3 M wässriger NaOH gelöst und 24 h gerührt: Anschließend wird 1,0 ml 5%ige $H_2O_2$-Lösung zugetropft und das Gemisch für weitere 24 h gerührt. Danach werden 1,32 g PEGG langsam zugetropft und bis zur Gelbildung (Viskositätsanstieg) weiter gerührt, anschließend das alkalische Gel mit verdünnter Salzsäure neutralisiert und mit entionisiertem Wasser gewaschen. Das Produkt wird bei 105°C getrocknet und danach gemahlen. Bezüglich des FSC-Wertes des Hydrogels (8 g/g) wird auf Tab. 2 verwiesen.

2. 5g Organocell-Lignin werden in 8 ml 3,3 M wässriger NaOH gelöst und 24 h gerührt. Anschließend wird 1,0 ml 5%ige $H_2O_2$-Lösung zugeben und das Gemisch für weitere 24h gerührt. Danach werden 1,32 g PEGG langsam zugetropft und bis zur Gelbildung weiter gerührt, anschließend das alkalische Gel mit verdünnter Salzsäure neutralisiert und mit entionisiertem Wasser gewaschen. Das Produkt wird bei 105°C getrocknet und danach gemahlen. Der FSC-Wert des gebildeten Hydrogeles beträgt 27,9 g (Tab. 3).

3. 5 g Sucrolin werden in 9 ml 3,3 M wässriger NaOH gelöst und 24 h gerührt. Anschließend werden 0,5 ml 5%ige $H_2O_2$-Lösung zugeben und das Gemisch für weitere 24h gerührt. Danach werden 1,32 g PEGG langsam zugetropft und bis zur Gelbildung (Viskositätsanstieg) weiter gerührt, anschließend das alkalische Gel mit verdünnter Salzsäure neutralisiert und mit entionisiertem Wasser gewaschen. das Produkt wird bei 105°C getrocknet und gemahlen. Das Hydrogel zeichnet sich durch einen FSC-Wert von 8,0 g/g aus (Tab. 3).

Oxidation von Lignin mit Wasserstoffperoxid/Eisen(II)/Mangan(II)im neutralen Milieu und Vernetzung mit Poly-(ethylenglykol)-diglycidylether (nachfolgend PEGG)

4. 5 g Indulin werden in 10 ml $H_2O$ suspendiert und 0,01 g FeCl2*4$H_2O$ zugegeben. Das Gemisch wird 30 min gerührt und 1 ml 5%ige $H_2O_2$-Lösung zugegeben und danach für weitere 24 h gerührt Anschließend werden 10 ml 3,3 M wässrige NaOH zugeben und das Gemisch für weitere 24 h gerührt. Danach wird die alkalische Lösung auf einen Feststoffgehalt von 30-35% eingeengt (Abzug, Vakuumrotationsverdampfer), so dass diese gerade noch rührfähig ist. Unter Rühren werden 0,55 g PEGG (entspricht 0,21 mMol / g Lignin) langsam zugetropft und bis zur Gelbildung (Viskositätsanstieg) weiter gerührt. Anschließend wird das alkalische Gel mit verdünnter Salzsäure neutralisiert und mit entionisiertem Wasser gewaschen. Das Produkt wird bei 105°C getrocknet und zum Granulat gemahlen. Bezüglich des FSC-Wertes (48,5 g/g) wird auf Tab. 2 verwiesen. Daraus wird ersichtlich, dass im Vergleich zum Gel auf Basis von nicht modifiziertem Indulin der FSC-Wert auf mehr als das 6-Fache erhöht werden konnte. Der Verlauf der das Gel kennzeichnenden rheologischen Parameter dynamische Viskosität $\eta^*$, Speicher- und Verlustmodul G' und G" sowie des Verlustfaktors tan $\delta$ über der Kreisfrequenz $\omega$ ist in Abb. 1 dargestellt und deutet auf den Gel-Charakter und die mechanische Stabilität des Materials hin. Hinsichtlich der Wasserretention im Boden wird auf Abb. 2 verwiesen. Aus dieser wird ersichtlich, dass sich insbesondere im Bereich der Wasserspannung zwischen Feldkapazität (pF 1,8) und permanentem Welkepunkt (pF 4,2) der Wassergehalt eines Reinsandes durch Applikation des Lignin-Hydrogels auf mehr als das 3-Fache steigern lässt.

5. wie Ausführungsbeispiel 4, aber Verwendung einer Vernetzerstoffmenge von 0,70 g PEGG (entspricht 0,27 mMol / g Lignin). Bezüglich des FSC-Wertes (27,2 g/g) wird auf Tab. 3 verwiesen. Der Verlauf der das Gel kennzeichnenden rheologischen Parameter dynamische Viskosität $\eta^*$, Speicher- und Verlustmodul G' und G" sowie des Verlustfaktors tan $\delta$ ist in Abb. 1 dargestellt.

6. wie Ausführungsbeispiel 4, aber Verwendung einer Vernetzerstoffmenge von 0,85 g PEGG (0,32 mMol / g Lignin). Bezüglich des FSC-Wertes (22,7 g/g) wird auf Tab. 3 verwiesen. Der Verlauf der das Gel kennzeichnenden rheologischen Parameter dynamische Viskosität $\eta^*$, Speicher- und Verlustmodul G' und G" ist in Abb. 1 dargestellt. Daraus kann abgeleitet werden, dass mit der Vernetzerstoffmenge die dynamische Viskosität $\eta^*$, der elastische Anteil G' und somit die mechanische Stabilität der Lignin-Gele deutlich zunehmen.

7. 5 g Indulin werden in 10 ml $H_2O$ suspendiert und 0,01 g MnCl2*4$H_2O$ zugegeben und das Gemisch 30 min gerührt. Anschließend wird 1ml 5%ige $H_2O_2$-Lösung zugetropft und die Lignin-Supsension 24 h weiter gerührt. Danach werden 10 ml 3,3 M wässrige NaOH zugeben und das Gemisch wiederum 24 h gerührt. Anschließend wird

die alkalische Lösung auf einen Feststoffgehalt von 30-35% einengt (Abzug, Vakuumrotationsverdampfer), so dass diese gerade noch rührfähig ist. Unter Rühren werden 0,55 g PEGG langsam zutropft und bis zur Gelbildung (Viskositätsanstieg) weiter gerührt. Anschließend wird das alkalische Gel mit verdünnter Salzsäure neutralisiert und mit entionisiertem Wasser gewaschen. Das Produkt wird bei 105°C getrocknet und anschließend gemahlen. Bezüglich des FSC-Wertes (35,2 g/g) wird auf Tab. 2 verwiesen.

**Patentansprüche**

1. Verfahren zur Herstellung eines Substrats zur Bodenverbesserung mit Wasser speichernder Eigenschaft auf Lignin-Basis, **gekennzeichnet durch** die Schritte,

   - Bereitstellen von Lignin,
   - Oxidation des Lignins alternativ in einer wässrigen alkalischen oder einer pHneutralen wässrigen Suspension, wobei die pH-neutrale wässrige Suspension nach der Oxidation des Lignins in ein alkalisches Milieu überführt wird, wobei zur Oxidation des Lignins Wasserstoffperoxid oder ein Fenton-System, letzteres bestehend aus der Kombination von Wasserstoffperoxid und einem Fe(II)-Salz oder ein Gemisch aus Wasserstoffperoxid und einem Mn(II)-Salz verwendet wird.
   - Vernetzung des Lignins in einem wässrigen alkalischen Medium unter Einsatz mehrfach funktioneller Verbindungen,
   - Neutralisation, Trocknung und Zerkleinerung des Lignins.

2. Verfahren nach Anspruch 1, **dadurch gekennzeichnet, dass** technisches Lignin wie Alkali-Lignin, Organosolv-Lignin oder Hydrolyse-Lignin bereitgestellt wird.

3. Verfahren nach Anspruch 1 oder 2, **dadurch gekennzeichnet, dass** zur Vernetzung des Lignins bifunktionelle Epoxide, bevorzugt Poly-(ethylenglykol)- diglycidylether verwendet wird.

4. Substrat zur Bodenverbesserung mit Wasser speichernder Eigenschaft bestehend aus Lignin erhältlich durch ein Verfahren nach den Ansprüchen 1 bis 3.

5. Substrat nach Anspruch 4, **dadurch gekennzeichnet, dass** das Lignin Alkali-Lignin, Organosolv-Lignin oder Autohydrolyse-Lignin ist.

6. Substrat nach einem der Ansprüche 4 oder 5, **dadurch gekennzeichnet, dass** die Vernetzersubstanz ein Diglycidylether ist.

7. Lignin-Substrat nach Anspruch 6, **dadurch gekennzeichnet, dass** modifiziertes Lignin über 5 bis 15 Ethylenoxidgruppen, bevorzugt 8 bis 10 Ethylenoxidgruppen vernetzt ist.

8. Verwendung des Substrats, hergestellt nach einem der Ansprüche 1 bis 3, zur Verbesserung der Bodeneigenschaften, **dadurch gekennzeichnet, dass** das Substrat als Wasserspeicher verwendet wird, der gegenüber Wasserspeichern aus nicht modifizierten technischen Ligninen über ein deutlich höheres Wasseraufnahme oder Quellungsvermögen verfügt.

9. Verwendung nach Anspruch 8, **dadurch gekennzeichnet, dass** das Substrat ein bis zu 8-fach gesteigertes Wasseraufnahmevermögen im Vergleich zu vernetzten nicht modifizierten technischen Ligninen aufweist.

10. Verwendung nach Anspruch 8 oder 9, **dadurch gekennzeichnet, dass** das Substrat in humusarmen Böden zur Stabilisierung des Bodengefüges verwendet wird.

11. Verwendung nach einem der Ansprüche 8 bis 10, **dadurch gekennzeichnet, dass** das Substrat in grobporigen Böden zur Erhöhung des Anteils an Mittelporen eingesetzt wird und somit die Wasserretention und der Anteil an pflanzenverfügbarem Wasser im Boden deutlich erhöht wird.

12. Verwendung nach einem der Ansprüche 8 bis 11, **dadurch gekennzeichnet, dass** das Substrat in trockener und zerkleinerter Form verwendet wird.

13. Verwendung nach Anspruch 12, **dadurch gekennzeichnet, dass** das Substrat in einer Korngröße von 100 μm bis 5 mm verwendet wird.

14. Verwendung nach einem der Ansprüche 8 bis 13, **dadurch gekennzeichnet, dass** das Substrat als Pulver bzw. Granulat, welches in einer Menge von 0,1 bis 1 Vol.-%, bevorzugt 0,25 bis 0,5 Vol.-% bezogen auf das Bodenvolumen eingebracht wird.

## Claims

1. A Process for the manufacture of a substrate for soil improvement with water-storing property on a lignin base, **characterized in** the following steps

   - Provision of lignin
   - Oxidation of lignin either in an aqueous, alkaline or a pH-neutral aqueous suspension, wherein, after the oxidation of the lignin, the pH-neutral aqueous suspension will be transferred into an alkaline environment, wherein for the oxidation of lignin hydrogen peroxide or a Fenton-system is used, the latter comprised of a combination of hydrogen peroxide and an Fe(II) salt, or a mixture of hydrogen peroxide and an Mn(II) salt
   - Crosslinking of lignin in an aqueous alkaline medium, using multifunctional compounds
   - Neutralisation, drying and crushing of the lignin.

2. A process according to claim 1, **characterized in that** technical lignin, like alkaline lignin, organosolv lignin or hydrolysis lignin is provided.

3. A process according to claim 1 or 2, **characterized in that** for crosslinking of the lignin bifunctional expoxides, preferably poly(ethylenglycol)- diglycidyl ether, are used.

4. A Substrate for soil improvement with water storing property consisting of lignin, manufactured in a process according to one of the claims 1 to 3

5. A substrate according to claim 4, **characterized in that** the lignin is an alkaline lignin, oranosolv lignin or autohydrolysis lignin.

6. A substrate according to one of the claims 4 or 5, **characterized in that** the crosslinking substance is a diglycidyl ether.

7. A lignin substrate according to claim 6, **characterized in that** modified lignin is crosslinked over 5 to 15 ethylen oxide groups, preferably 8 to 10 ethylen oxide groups.

8. Usage of a substrate, manufactured according to one of the claims 1 to 3, for the improvement of soil properties, **characterized in that** the substrate is used as a water storage, possessing a distinct higher water absorption or swelling property, compared to water storages of not modified technical lignins.

9. Usage according to Claim 8, **characterized in that** the substrate possesses an up to 8-fold higher water absorption property, compared to not modified technical lignins.

10. Usage according to one of the claims 8 or 9, **characterized in that** the substrate is used in soils of low humus content for stabilisation of the soil fabric.

11. Usage according to one of the claims 8 to 10, **characterized in that** the substrate is used in coarsely porous soils for increasing the ratio of medium sized pores, and hence the water retention and the ratio of plant available water in the soil will be increased distinctly.

12. Usage according to one of the claims 8 to 11, **characterized in that** the substrate is used in dried and crushed shape.

13. Usage according to claim 12, **characterized in that** the substrate is uses with a grain size of 100 μm to 5 mm.

14. Usage according to one of the claims 8 to 13, **characterized in that** the substrate is added as a powder or granulate in an amount of 0,1 to 1 vol-%, preferably 0,25 to 0,5 vol-%, in relation to the soil volume.

## Revendications

1. Procédé de fabrication d'un substrat d'amendement du sol à base de lignine ayant une propriété d'emmagasinage de l'eau, **caractérisé par** les étapes consistant à,

   - provisionner de la lignine,
   - oxydation de la lignine soit dans une suspension aqueuse alcaline soit dans une suspension aqueuse à pH neutre, la suspension aqueuse à pH neutre étant transformée en milieu alcalin après l'oxydation de la lignine, l'oxydation de la lignine utilisant du peroxyde d'hydrogène ou un système de Fenton, ce dernier étant constitué de la combinaison de peroxyde d'hydrogène et d'un sel de Fe(II) ou d'un mélange de peroxyde d'hydrogène et d'un sel de Mn(II),
   - réticuler la lignine dans un milieu aqueux alcalin au moyen de composés multifonctionnels,
   - neutraliser, sécher et broyer la lignine.

2. Procédé selon la revendication 1, **caractérisé en ce que** de la lignine industrielle telle que la lignine alcaline, lignine Organosolv ou lignine hydrolysée est préparée.

3. Procédé selon la revendication 1 ou 2, **caractérisé en ce qu'**un époxyde bifonctionnel, de préférence l'éther diglycidique poly-(éthylène glycol), est utilisé pour la réticulation de la lignine.

4. Substrat d'amendement du sol constitué de lignine ayant une propriété d'emmagasinage de l'eau, pouvant être obtenu par un procédé selon les revendications 1 à 3.

5. Substrat selon la revendication 4, **caractérisé en ce que** la lignine est de la lignine alcaline, lignine Organosolv ou lignine autohydrolysée.

6. Substrat selon une des revendications 4 ou 5, **caractérisé en ce que** la substance réticulante est un éther diglycidique.

7. Substrat de lignine selon la revendication 6, **caractérisé en ce que** la lignine modifiée est réticulée sur 5 à 15 groupes oxyde d'éthylène, de préférence 8 à 10 groupes oxyde d'éthylène.

8. Utilisation du substrat fabriqué selon une des revendications 1 à 3 pour l'amélioration des propriétés du sol, **caractérisée en ce que** le substrat est utilisé comme un réservoir d'eau, qui dispose d'un pouvoir d'absorption de l'eau ou d'une capacité de gonflement nettement supérieur(e) par rapport aux réservoirs d'eau constitués de lignines industrielles non modifiées.

9. Utilisation selon la revendication 8, **caractérisée en ce que** le substrat présente un pouvoir d'absorption de l'eau jusqu'à 8 fois supérieur comparé aux lignines industrielles réticulées non modifiées.

10. Utilisation selon la revendication 8 ou 9, **caractérisée en ce que** le substrat est utilisé dans des sols pauvres en humus pour stabiliser la structure du sol.

11. Utilisation selon une des revendications 8 à 10, **caractérisée en ce que** le substrat est utilisé dans des sols à pores grossiers pour augmenter la part de pores moyens et ainsi la rétention de l'eau et la part en eau disponible pour les plantes dans le sol est nettement accrue.

12. Utilisation selon une des revendications 8 à 11, **caractérisée en ce que** le substrat est utilisé sous forme sèche et broyée.

13. Utilisation selon la revendication 12, **caractérisée en ce que** le substrat est utilisé dans une granulométrie de 100 µm à 5 mm.

14. Utilisation selon une des revendications 8 à 13, **caractérisée en ce que** le substrat est apporté sous forme de poudre ou de granulés, dans une quantité de 0,1 à 1 % en vol., de préférence de 0,25 à 0,5 % en vol. par rapport au volume du sol.

| | *Indulin AT* | *Indulin ox.* |
|---|---|---|
| **emp.C9-Formel** | $C_9$ $H_{6,8}$ $O_{0,7}$ $S_{0,1}$ $(OCH_3)_{0,8}$ $(OH_{phen})_{0,7}$ $(OH_{aliph})_{0,7}$ $(O_{CO})_{0,1}$ $(OOH_{COOH})_{0,2}$ | $C_9$ $H_{6,9}$ $O_{1,2}$ $S_{0,1}$ $(OCH_3)_{0,8}$ $(OH_{phen})_{1,0}$ $(OH_{aliph})_{0,8}$ $(O_{CO})_{0,3}$ $(OOH_{COOH})_{0,3}$ |

Tab. 1: Empirische C9-Formeln von Indulin und des mit Wasserstoffperoxid/Eisen(II)-chloridtetrahydrat oxidierten Indulins

| | *nicht oxidiert* | *$H_2O_2$-RT* | *$H_2O_2$-80°C* | *$H_2O_2$-Fe(II)* | *$H_2O_2$-Mn(II)* |
|---|---|---|---|---|---|
| *Indulin AT* | 8,0 | - | **9,2*** | **48,5*** | **35,2*** |
| *Organocell-Lignin* | 27,9 | **72,5*** | 7,5 | 12,2 | - |

*Verbesserung der Quellungsleistung von Lignin-Gelen durch oxidative Vorbehandlung des Ausgangs-Lignins

Tab. 2: FSC-Werte ausgewählter Lignin-Hydrogele auf Basis nicht modifizierter und oxidierter technischer Lignine

| *Vernetzerstoffmenge mMol/g Indulin ox.** | ***0,21*** | ***0,27*** | ***0,32*** | ***0,38*** |
|---|---|---|---|---|
| *FSC (g/g)* | 48,5 | 27,2 | 22,7 | 20,5 |

*Indulin AT oxidiert mit Wasserstoffperoxid/Eisen(II)-chloridtetrahydrat

Tab. 3: FSC-Werte von Indulin-Gelen bei Variation der Stoffmenge an Poly-(ethylenglykol)-diglycidylether

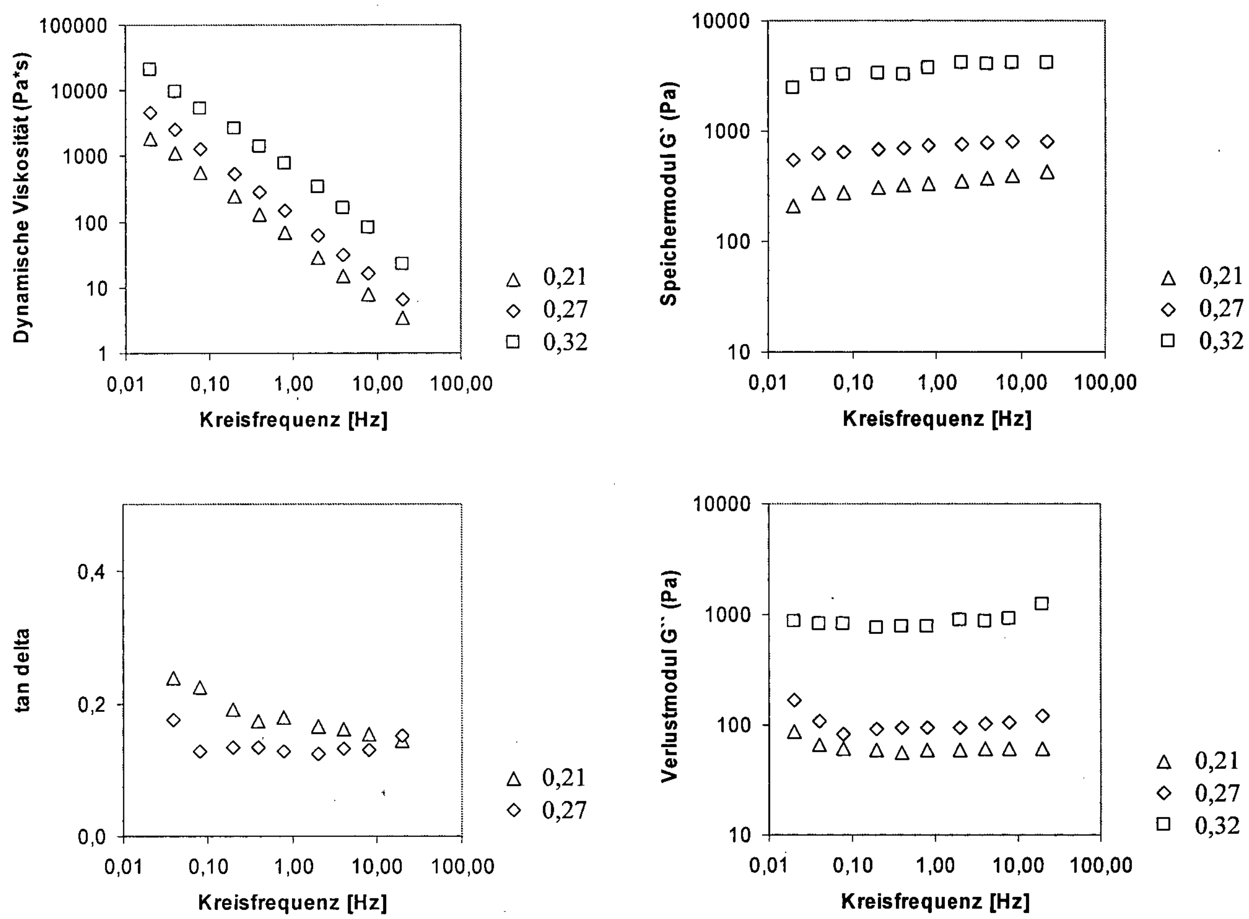


Abb. 1: Dynamische Viskosität η*, Speicher- und Verlustmodul G`bzw. G`` und Verlustfaktor tan δ von Hydrogelen auf Basis von Indulin, oxidiert mit Wasserstoffperoxid/Eisen(II)-chloridtetrahydrat, vernetzt mit unterschiedlichen Stoffmengen Poly-(ethylenglykol)-diglycidylether (0,21, 0,27 bzw. 0,32 mMol/g Indulin).

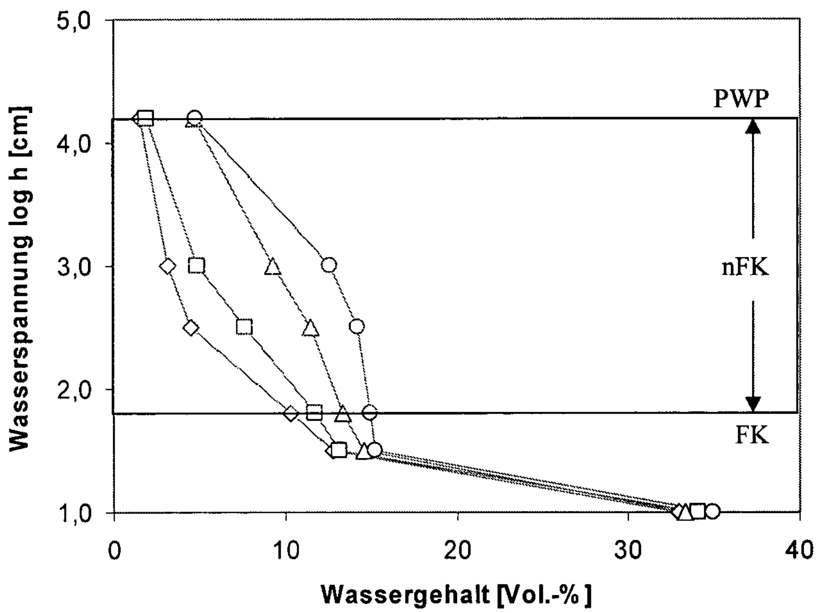


Abb. 2: Wasserretentionskurven eines Reinsandes behandelt mit unterschiedlichen Mengen (Null-Variante ◇, 0,1 Masse-% □, 0,25 Masse-% △, 0,5 Masse-% ○) eines Lignin-Hydrogels (Variante IND ox-III-PEGG=Indulin oxidiert mit Wasserstoffperoxid/Eisen(II)-chloridtetrahydrat vernetzt mit Poly-(ethylenglykol)-diglycidylether. FK = Feldkapazität, nFK = nutzbare Feldkapazität, PWP = permanenter Welkepunkt.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19828483 A1
- US 3864276 A
- US 4332589 A
- DE 2703812 A1
- DE 2623663 A1
- US 4131573 A
- US 3857830 A
- US 6593460 B
- DE 68903601
- DE 69800265 T2
- DE 2658943
- DE 2558545


### In der Beschreibung aufgeführte Nicht-Patentliteratur


- **M. NISHIDA ; Y. URAKI ; Y. SANO.** *Proc. ISWPC,* 2001, vol. II, 43-46
- **M. NISHIDA ; Y. URAKI ; Y. SANO.** *Bioresource Technol.,* 2003, vol. 88, 81-83
- **H. YAMAMOTO ; M. AMAIKE ; H. SAITOH ; Y. SANO.** *Mat. Sci. Eng.,* 2000, vol. C7, 143-147
- **W.K. EL-ZAWAWY.** *Polym. Adv. Technol.,* 2005, vol. 16, 48-54
- **M. NISHIDA et al.** *Proc. ISWPC,* 2001, vol. II, 43-46
- **M. NISHIDA et al.** *Bioresource Technol.,* 2003, vol. 88, 81-83
- **L. PASSAUER.** *DiplomArbeit,* 2004